# EUROPÄISCHE PATENTANMELDUNG

(11) **EP 2 003 363 A2**
(43) Veröffentlichungstag der Anmeldung: **17.12.2008**
(21) Anmeldenummer: 08154659.0
(22) Anmeldetag: 17.04.2008
(51) Int. Cl.: F16F 9/04

(54) **Luftfedereinrichtung**

(30) Priorität: 13.06.2007 DE 102007027834
(71) Anmelder: Continental Aktiengesellschaft, 30165 Hannover (DE)
(72) Erfinder: Rosner, Dirk, 30826 Garbsen (DE)
(74) Vertreter: Finger, Karsten

(57) **Zusammenfassung**

Luftfedereinrichtung (1) mit einem freistehenden Luftfederbalg (4), bei der der Luftfederbalg mit Hilfe von Spannringen (6) am Luftfederkolben (3) und am Luftfederdeckel (2) befestigt ist und die Luftfedereinrichtung mindestens deckelseitig ein die dortige Rollfalte des Luftfederbalges abstützenden konturierten Ring (10) aus elastischem Material aufweist, der radial über dem Spannring und auf im Wesentlichen gleicher axialen Position des Spannringes angeordnet ist.

## Beschreibung

Die Erfindung betrifft eine Luftfedereinrichtung mit einem im Betriebszustand im Wesentlichen freistehenden Luftfederbalg aus elastomerem Material, einem Luftfederdeckel und einem Luftfederkolben, wobei der der Luftfederbalg unter Ausbildung einer ersten Rollfalte mit seinem ersten Ende am Luftfederkolben und unter Ausbildung einer zweiten Rollfalte mit seinem zweiten Ende am Luftfederdeckel luftdicht befestigt ist und zusammen mit dem Luftfederdeckel und dem Luftfederkolben eine volumenelastische Hohlkammer bildet, wobei der Luftfederbalg beim Ein- und Ausfedern an der als Abrollkontur ausgebildeten Außenoberfläche des Luftfederkolbens abrollen kann, wobei die Befestigung des Rollbalges am Luftfederkolben und am Luftfederdeckel mit Hilfe von Spannringen erfolgt, die das jeweilige Ende des Luftfederbalges am Anschlussteil festklemmen, und wobei die Luftfedereinrichtung mindestens deckelseitig ein die dortige Rollfalte des Luftfederbalges abstützenden konturierten Ring aus elastischem Material aufweist.

Luftfedereinrichtungen, auch kurz Luftfedern genannt, die zwischen Fahrwerk und Karosserie eingespannt sind und die einen Luftfederbalg aufweisen, der wiederum zwischen einem z.B. fahrwerkseitigen Luftfederdeckel und einem karosserieseitigen Abrollkolben befestigt ist, sind in eine Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur eines konzentrischen Bauteiles ab, üblicherweise auf dem Luftfederkolben/Abrollkolben. Eine derartige Luftfeder wird häufig in Straßen- oder Schienenfahrzeugen eingesetzt, um eine komfortable Federung zu erreichen. Die Luftfeder steht im Betrieb unter einem inneren Überdruck.

Dabei existieren sowohl Luftfedern, bei denen der Luftfederbalg nur einseitig eine Rollfalte bildet, nämlich in der Regel auf dem Abrollkolben, als auch Luftfedern, bei denen der Rollbalg unter Bildung einer beidseitigen (Roll-)Falte zwischen Luftfederdeckel und Abrollkolben eingespannt ist. Luftfedern mit einseitiger Rollfalte sind oft in Pkw zu finden, während die oft größeren und tragfähigeren Luftfedern mit beidseitiger Rollfalte eher in LKW und Schienenfahrzeuge eingebaut werden.

Üblicherweise rollt also bei Luftfedern mit Doppelfalte als auch bei solchen mit nur einer Falte der Luftfederbalg bei Federbewegungen unter Beibehaltung der Rollfalte im Wesentlichen auf der Außenkontur des Luftfederkolbens ab. Bei Luftfedern mit doppelter / beidseitiger Rollfalte wird ein Abrollen der am Luftfederdeckel befindliche Rollfalte an Deckelbauteilen durch eine entsprechende Formgebung des Deckels minimiert oder ganz verhindert, damit eine stets definierte Lage der einzelnen Elemente der Luftfedereinrichtung gewährleistet ist.

Zur Steigerung eines komfortablen Federungsverhaltens und zur Reduktion des so genannten Harshness-Verhaltens sind zudem dünne, d.h. dünnwandige Rollbälge gewünscht. Der Fachmann versteht unter dem Begriff "Harshness" ein überlagertes, etwas raues, hartes Federungsverhalten bei Schwingungen höherer Frequenz und geringer Amplitude, das durch die Abhängigkeiten von den für Luftfeder- und Dämpfereinheiten gebräuchlichen Bauweisen, Materialien, Eigendämpfüngen, Trägheiten etc. entsteht.

Um aber bei dünneren Rollbälgen eine gute Abstützung der hoch beanspruchten "nicht rollenden" Rollfalte oder Umschlagfalte zu erreichen, werden die freistehenden und mit doppelter Rollfalte arbeitenden Luftfedern oder -dämpfer mit konturierten Formringen versehen, die die Umschlagfalte des Luftfederbalges in ihrer Endlagen abstützt und damit das Abrollen der anderen Rollfalte ermöglicht. Der konturierte Ring, d.h. das Rollfaltenlager ist üblicherweise am Luftfederdeckel befestigt, also an dem Anschlussbauteil des Rollbalges, welches keine Abrollbewegung erlauben soll.

Eine erhöhte Tragfähigkeit des Gesamtsystems wird bei dünnen Rollbälgen zusätzlich oft dadurch erreichen, dass die Rollbälge mit so genannten Außenführungen zu versehen sind, nämlich mit einem den Rollbalg umgebenden rohrförmigen "Stützkorsett" oder Stützkörper. So lässt sich beispielsweise ein dünner Rollbalg mit einem dünnen Leichtmetallrohr als Stützkörper auf hohe Innendrücke und damit hohe Tragfähigkeiten bei gleichzeitig gutem Harshness -Verhalten optimieren. Die Außenführungen sind so angeordnet, dass der Rollbalg einerseits an der Außenseite des Abrollkolbens und andererseits an der Innenoberfläche der Außenführung abrollen kann.

Die DE 198 42 733 A1 offenbart hierzu ein Luftfedersystem mit einem elastischen Rollfaltenlager zur Abstützung der sich ausbildenden "nicht abrollenden" Rollfalte des Luftfederbalges, jedoch ohne Außenführung. Das Rollfaltenlager umläuft dabei den Luftfederdeckel ringförmig und stützt sich am karosseriefesten Bauteil ab. Die Abstützung erfolgt also an einem Bauteil, das entweder zum Luftfederdeckel oder zu einem weiteren Anschluss- oder Zusatzbauteil gehört. Ein Ausführungsbeispiel beinhaltet auch die Abstützung des Rollfaltenlagers an einem radial sich erstreckenden Teil des Spannringes. Nachteilig bei diesen Ausführungen ist es, dass die Bauhöhe der Luftfeder durch das Rollfaltenlager vergrößert wird, da letzteres einen entsprechenden Bauraum zwischen Klemmbereich des Spannringes und axialer Anlagefläche benötigt. Die Bauhöhen sollen aber bei modernen Achskonstruktionen möglichst niedrig gehalten werden.

Für die Erfindung bestand also die Aufgabe, eine im Wesentlichen freistehende Luftfeder mit Doppelfalte bereitzustellen, bei der eine sichere Lagerung der Rollfalte ohne Vergrößerung des Bauraumes sicher, einfach und ohne hohen Montageaufwand erreicht wird.

Gelöst wird diese Aufgabe durch die Merkmale des Hauptanspruchs. Weitere vorteilhafte Ausbildungen sind in den Unteransprüchen offenbart.

Dabei ist der konturierte Ring radial direkt über dem Spannring und auf im Wesentlichen gleicher axialer Position des Spannringes und in dessen Klemmbereich angeordnet. Dadurch nimmt der konturierte Ring, also das Rollfaltenlager, nicht mehr an Bauraum, hier an Bauhöhe ein, als der Spannring für die Bereitstellung einer sicheren Klemmfunktion benötigt. Die Folge ist eine Reduktion der Gesamtbauhöhe der Luftfeder um ggf. mehrere Zentimeter, was in Bezug auf den erforderlichen Einbauraum im Fahrzeug ein deutlicher Gewinn ist.

Eine vorteilhafte Ausbildung besteht darin, dass der konturierte Ring einen im Wesentlichen dem Außendurchmesser des Spannringes entsprechenden Innendurchmesser aufweist und somit auch radial so klein wie möglich gehalten werden kann.

Eine weitere vorteilhafte Ausbildung besteht darin, dass der konturierte Ring unter Aufweitung seines Innendurchmessers radial über dem Spannring aufgeklemmt und reibschlüssig mit letzterem verbunden ist. Dadurch ergibt sich eine besonders einfache Montage der Luftfeder.

Eine weitere vorteilhafte Ausbildung besteht darin, dass der der konturierte Ring einseitig einen nach innen gerichteten Kragen aufweist, der mindestens teilweise zwischen Luftfederdeckel und weiteren karosserieseitig anschließenden Bauteilen angeordnet ist. Mit einer solchen Ausbildung erhöht sich zwar der Bauraum im Bereich der Klemmung wieder geringfügig, es ergibt sich aber der Vorteil, dass weitere Bauteile, wie etwa isolierende Ringe oder Unterlagen im Anschluss an die Karosserie entfallen können.

Eine weitere vorteilhafte Ausbildung besteht darin, dass konturierte Ring aus einem schwingungs- oder schallisolierenden Material , vorzugsweise aus Gummi besteht, so dass eine Übertragung von Schwingungen der Luftfeder respektive des Rollbalges minimiert werden kann.

Eine weitere vorteilhafte Ausbildung besteht darin, dass die Luftfedereinrichtung eine hülsenförmige, den Luftfederbalg tangential umfassende Außenführung aufweist. So lässt sich beispielsweise ein dünner Rollbalg mit einem dünnen Leichtmetallrohr als Stützkörper auf hohe Innendrücke und damit hohe Tragfähigkeiten bei gleichzeitig gutem Harshness - Verhalten optimieren.

Eine weitere vorteilhafte Ausbildung besteht darin, dass der konturierte Ring einen radial außen umlaufenden und rohrförmig im Wesentlichen in Richtung der Längsachse sich erstreckenden Flansch in Form eines Umschlags aufweist. Dadurch entsteht ein zusätzlicher Schutzring für den empfindlichen Bereich der Umschlagfalte.

Eine weitere vorteilhafte Ausbildung besteht darin, dass der konturierte Ring als Bauteil aus einem Verbundmaterial ausgebildet ist und abrollseitig eine Schicht aus einem Werkstoff aufweist, welcher eine höhere Festigkeit und Härte als die darunter liegende stützseitige elastische Dämpfungsschicht besitzt. Damit erreicht man eine stabile Innenkontur des konturierten Ringes, an die sich die Umschlagfalte sicher anlegen kann, und gleichzeitig die gewünscht elastische Lagerung des Rollfaltenlagers insgesamt.

Anhand eines Ausführungsbeispieles soll die Erfindung näher erläutert werden. Es zeigen:
- Fig. 1: eine erfindungsgemäße Luftfedereinrichtung
- Fig. 2: einen in der Fig. 1 markierten Ausschnitt im Detail

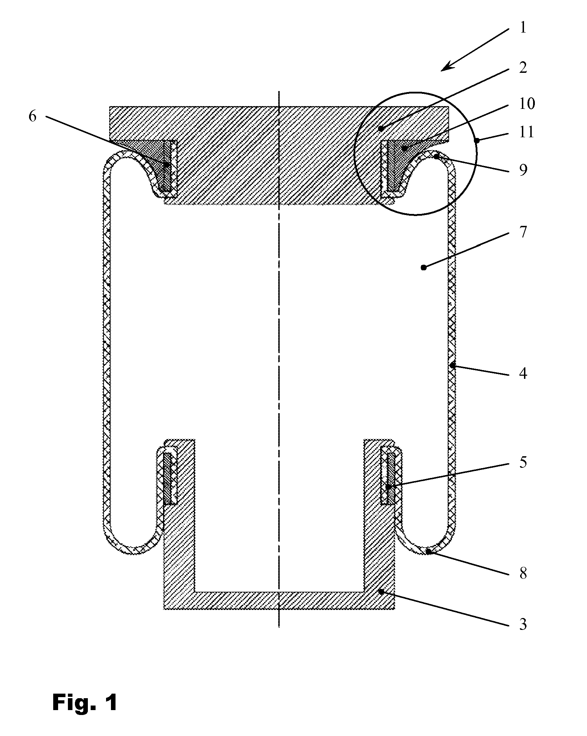

Die Fig. 1 zeigt hierzu eine erfindungsgemäße Luftfedereinrichtung 1, die einen oben angeordneten Luftfederdeckel 2, einen im unteren Teil angeordneten Luftfederkolben 3 und einen Luftfederbalg 4 aufweist. Die hier dargestellte Ausführungsform weist keine Außenführung auf. Selbstverständlich kann die gezeigte Ausführung auch mit einer Außenführung für den Luftfederbalg versehen werden.

Der Luftfederbalg 4 ist mit Spannringen 5 und 6 jeweils auf entsprechenden Klemmsitzen des Luftfederkolbens 3 und des Luftfederdeckels 2 luftdicht verpresst und bildet zwischen Luftfederkolben 3 und Luftfederdeckel 2 eine volumenelastische Hohlkammer 7, die mit einem Überdruck beaufschlagbar ist. Dieser Überdruck sorgt dafür, dass der Luftfederbalg 4 eine Rollfalte 8 und eine weitere Falte 9 bildet. Die Rollfalte 8 rollt bei axialen Relativbewegungen von Luftfederkolben 4 und Luftfederdeckel 2 auf dem Luftfederkolben 3 ab. Bei der Falte 9 wird ein Abrollen am Luftfederdeckel 2 durch ein entsprechendes Rollfaltenlager minimiert bzw. ganz verhindert. Dazu ist der Luftfederbalg 4 bzw. dessen Umschlagfalte deckelseitig durch einen konturierten Ring 10 gestützt, so dass er nicht über den Luftfederdeckel 2 abrollt.

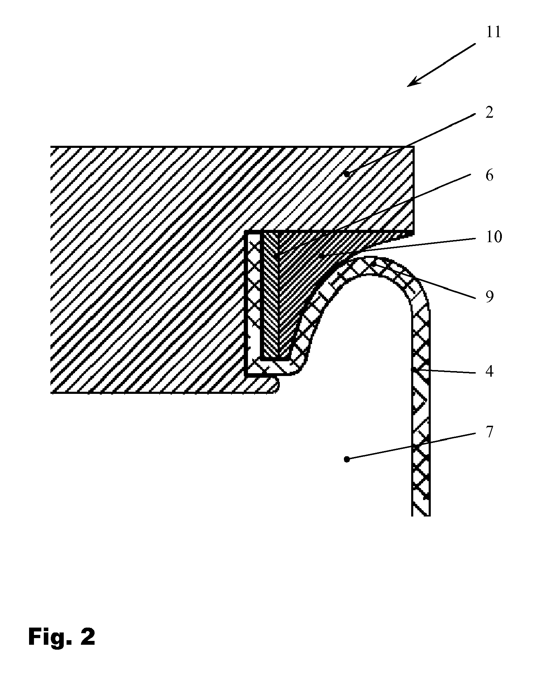

Die Fig. 2 zeigt noch einmal den in der Fig. 1 markierten Ausschnitt 11 im Detail. In dieser Figur erkennt man gut, dass der konturierte Ring 10 radial direkt über dem Spannring 6 und auf im Wesentlichen gleicher axialer Position des Spannringes und in dessen Klemmbereich angeordnet ist. Der konturierte Ring 10 besteht aus Gummi und unter Aufweitung seines Innendurchmessers radial über dem Spannring 6 aufgeklemmt und somit reibschlüssig mit letzterem verbunden.

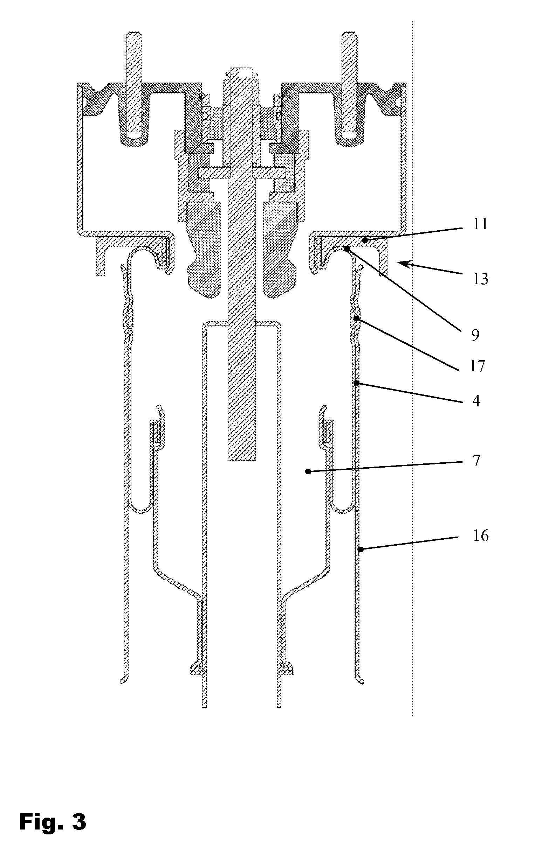

Die Fig. 3 zeigt eine weitere Ausführung der erfindungsgemäßen Luftfedereinrichtung mit einer Außenführung 16 für den Luftfederbalg 4, die mit einem Innenspannring 17 an letzterem befestigt ist.

Der hier gezeigte konturierte Ring 11 weist einen radial außen umlaufenden und rohrförmig im Wesentlichen in Richtung der Längsachse sich erstreckenden Flansch oder Umschlag 13 auf, der die Umschlagfalte 9 gegen Verschmutzung und Steinschlag schützt.

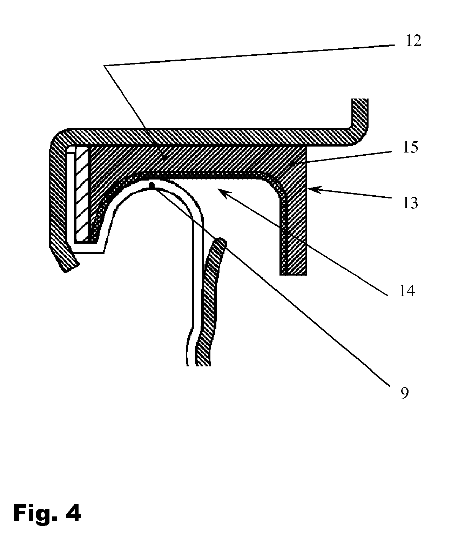

Die Fig. 4 zeigt eine noch andere Ausführung der erfindungsgemäßen Luftfedereinrichtung, bei der ein konturierter Ring 12 als Bauteil aus einem Verbundmaterial ausgebildet ist und abrollseitig eine Schicht 14 aus einem Kunststoff aufweist, welcher eine höhere Festigkeit und Härte als die darunter liegende stützseitige elastische Dämpfungsschicht 15 aus Gummi besitzt.

### Bezugszeichenliste

### (Teil der Beschreibung)

- 1: Luftfedereinrichtung
- 2: Luftfederdeckel
- 3: Luftfederkolben
- 4: Luftfederbalg
- 5: Spannring
- 6: Spannring
- 7: Volumenelastische Hohlkammer
- 8: Rollfalte
- 9: Falte / Umschlagfalte
- 10 - 12: Konturierter Ring
- 13: Flansch
- 14: Abrollseitige Schicht
- 15: Dämpfungsschicht
- 16: Außenführung
- 17: Innenspannring

## Patentansprüche

1. Luftfedereinrichtung (1) mit einem im Betriebszustand im Wesentlichen freistehenden Luftfederbalg (4) aus elastomerem Material, einem Luftfederdeckel (2) und einem Luftfederkolben (3) als Anschlussteile, wobei der der Luftfederbalg (4) unter Ausbildung einer Rollfalte (8) mit seinem ersten Ende am Luftfederkolben (3) und unter Ausbildung einer Umschlagfalte (9) mit seinem zweiten Ende am Luftfederdeckel (2) luftdicht befestigt ist und zusammen mit dem Luftfederdeckel (2) und dem Luftfederkolben (3) einen volumenelastische Hohlkammer (7) bildet, wobei der Luftfederbalg beim Ein- und Ausfedern an der als Abrollkontur ausgebildeten Außenoberfläche des Luftfederkolbens (3) abrollen kann, wobei die Befestigung des Rollbalges am Luftfederkolben und am Luftfederdeckel mit Hilfe von Spannringen (5, 6) erfolgt, die das jeweilige Ende des Luftfederbalges am Anschlussteil festklemmen, und wobei die Luftfedereinrichtung mindestens deckelseitig ein die dortige Umschlagfalte (9) des Luftfederbalges abstützenden konturierten Ring (10) aus elastischem Material aufweist, **dadurch gekennzeichnet, dass** der konturierte Ring (10) radial direkt über dem Spannring (6) und auf im Wesentlichen gleicher axialen Position des Spannringes (6) und in dessen Klemmbereich angeordnet ist.

2. Luftfedereinrichtung nach Anspruch 1, **dadurch gekennzeichnet, dass** der konturierte Ring (10) einen im Wesentlichen dem Außendurchmesser des Spannringes entsprechenden Innendurchmesser aufweist.

3. Luftfedereinrichtung nach Anspruch 1 oder 2, **dadurch gekennzeichnet, dass** der konturierte Ring (10) unter Aufweitung seines Innendurchmessers radial über dem Spannring (6) aufgeklemmt und reibschlüssig mit letzterem verbunden ist.

4. Luftfedereinrichtung nach Anspruch 1 bis 3, **dadurch gekennzeichnet, dass** der konturierte Ring (10) einseitig einen nach innen gerichteten Kragen aufweist, der mindestens teilweise zwischen Luftfederdeckel und weiteren karosserieseitig anschließenden Bauteilen angeordnet ist.

5. Luftfedereinrichtung nach Anspruch 1 bis 4, **dadurch gekennzeichnet, dass** der konturierte Ring (10) aus einem schwingungs- oder schallisolierenden Material besteht.

6. Luftfedereinrichtung nach Anspruch 5, **dadurch gekennzeichnet, dass** der konturierte Ring aus Gummi besteht.

7. Luftfedereinrichtung nach Anspruch 1 bis 6, **dadurch gekennzeichnet, dass** der konturierte Ring (11) einen radial außen umlaufenden und rohrförmig im Wesentlichen in Richtung der Längsachse sich erstreckenden Flansch (13 Umschlag) aufweist.

8. Luftfedereinrichtung nach Anspruch 1 bis 7, **dadurch gekennzeichnet, dass** der konturierte Ring (12) als Bauteil aus einem Verbundmaterial ausgebildet ist und abrollseitig eine Schicht (14) aus einem Werkstoff aufweist, welcher eine höhere Festigkeit und Härte als die darunter liegende stützseitige elastische (Dämpfungs) Schicht (15) besitzt.

9. Luftfedereinrichtung nach Anspruch 1 bis 6, **dadurch gekennzeichnet, dass** die Luftfedereinrichtung eine hülsenförmige, den Luftfederbalg tangential umfassende Außenführung (16) aufweist.
